# EUROPEAN PATENT APPLICATION

(11) **EP 4 696 732 A1**
(43) Date of publication of application: **18.02.2026**
(21) Application number: 24788795.3
(22) Date of filing: 11.04.2024
(51) Int. Cl.: C08G 63/08, C08L 67/04, C08L 101/16

(54) **POLYLACTIC ACID MODIFIER, POLYLACTIC ACID RESIN COMPOSITION, AND METHOD FOR PRODUCING MOLDED ARTICLE**

(30) Priority: 14.04.2023 JP 2023066678
(71) Applicant: Daicel Corporation, Osaka-shi, Osaka 530-0011 (JP)
(72) Inventor: HE, Xudong, Tokyo 108-8230 (JP); KAWABATA, Yuta, Tokyo 108-8230 (JP); WATANABE, Jun, Tokyo 108-8230 (JP)
(74) Representative: Grünecker Patent- und Rechtsanwälte PartG mbB
(86) International application number: PCT/JP2024/014661
(87) International publication number: WO 2024/214773

(57) **Abstract**

An object of the present invention is to provide a polylactic acid modifier that improves flexibility and crystallinity as a single additive, and enables the production of a polylactic acid resin composition with excellent production efficiency. The polylactic acid modifier of the present disclosure contains at least a constituent unit derived from poly(L-lactic acid) or poly(D-lactic acid), and a constituent unit derived from a polyol, and is a triblock copolymer of polylactic acid/polyol/polylactic acid. The polylactic acid modifier preferably has an average particle size of 0.5 mmΦ or more, and the polyol is preferably polycaprolactone.

## Description

### Technical Field

The present disclosure relates to a polylactic acid modifier, a polylactic acid resin composition, and a method for producing a molded article. The present application claims priority to JP 2023-066678 filed in Japan on April 14, 2023, the content of which is incorporated herein by reference.

### Background Art

Polylactic acid is a resin material having biodegradability and biomass properties, and the demand for polylactic acid as a material capable of coping with environmental problems is increasing. Meanwhile, there are known problems that polylactic acid is hard and brittle and is inferior in impact resistance and flexibility in nature, and that due to poor crystallinity, polylactic acid requires a long time for solidification or crystallization and is inferior in heat resistance.

For improving these physical properties of polylactic acid, use of various modifiers is known. For example, for improving the flexibility and heat resistance, addition of a plasticizer or a crystal nucleating agent as an additive has been known (for example, Patent Document 1).

In addition, as another modification method, a method of forming a stereocomplex crystal (sc crystal) by using, as additives, compounds each containing an optical isomer has been known to improve the crystallinity (for example, Patent Document 2).

### Citation List

### Patent Document

Patent Document 1: JP 2014-118452 A
Patent Document 2: WO 2011/030766

### Summary of Invention

### Technical Problem

However, in the case of the known additives, it is necessary to use a plurality of additives in combination for improving the flexibility and crystallinity. Furthermore, since the additives are generally in the form of liquid or powder, when they are used with polylactic acid, which is generally in the shape of pellets, additional equipment for mixing is required. Therefore, there is a problem that the production process is complicated.

In addition, as for the compound disclosed in Patent Document 2, it is necessary to dissolve polylactic acid and the additive in a solution. Therefore, there are problems that the mixing takes time and special additional equipment for dissolution is required, and thus the production process is complicated, and further, that it is necessary to remove the solvent, and thus the production efficiency is deteriorated.

Accordingly, an object of the present disclosure is to provide a polylactic acid modifier that improves the flexibility and crystallinity as a single additive, and enables the production of a polylactic acid resin composition with excellent production efficiency.

### Solution to Problem

Specifically, the present disclosure provides a polylactic acid modifier, which contains at least a constituent unit derived from poly(L-lactic acid) or poly(D-lactic acid), and a constituent unit derived from a polyol, and is a block copolymer having a structure of polylactic acid/polyol/polylactic acid.

The polylactic acid modifier preferably has an average particle size of 0.5 mmΦ or more.

The polylactic acid modifier preferably exhibits no fluidity at room temperature.

In the polylactic acid modifier, the polyol is preferably polycaprolactone.

The present disclosure also provides a polylactic acid resin composition that is a mixture of a polylactic acid and a block copolymer, the polylactic acid being poly(L-lactic acid) or poly(D-lactic acid), the block copolymer being a polylactic acid modifier including at least a polyol and a polylactic acid of a form different from that of the polylactic acid, in which the block copolymer exhibits no fluidity at room temperature, and has an average particle size of 0.5 mmΦ or more, and relative to the poly(L-lactic acid) or the poly(D-lactic acid) alone, the polylactic acid resin composition reduces, by 30% or more, a time required for crystallization from a molten state when a temperature is lowered to 100 to 110°C and maintained, and the polylactic acid resin composition has a flexibility improvement percentage of 5% or more at room temperature.

In the polylactic acid resin composition, a content of the block copolymer with respect to a total amount of the polylactic acid resin composition is preferably from 0.5 to 50 mass%.

In the polylactic acid resin composition, the polyol is preferably polycaprolactone.

The present disclosure also provides a method for producing a molded article, the method including molding the polylactic acid resin composition by any one molding method selected from the group consisting of injection molding, extrusion molding, compression molding, transfer molding, lamination molding, cast molding, powder molding, calender molding, foam molding, blow molding, vacuum pressure molding, and melt spinning.

### Advantageous Effects of Invention

The polylactic acid modifier of the present disclosure improves the flexibility and crystallinity as a single additive, and enables the production of a polylactic acid resin composition with excellent production efficiency.

### Description of Embodiments

### Polylactic Acid Modifier

A polylactic acid modifier according to an embodiment of the present disclosure contains at least a constituent unit derived from poly(L-lactic acid) or poly(D-lactic acid), and a constituent unit derived from a polyol, and is a block copolymer containing a structure of polylactic acid/polyol/polylactic acid (hereinafter, the block copolymer is sometimes referred to as "block copolymer of the present disclosure"). One type of the block copolymer of the present disclosure may be used alone, or two or more types thereof may be used.

Since the block copolymer of the present disclosure contains at least a constituent unit derived from poly(L-lactic acid) or poly(D-lactic acid), and a constituent unit derived from a polyol, and contains a structure of polylactic acid/polyol/polylactic acid, the block copolymer forms an sc crystal with a polylactic acid, and thus can improve the crystallinity of polylactic acid. Moreover, since the block copolymer of the present disclosure contains the polyol, the block copolymer can also improve the flexibility.

In the present disclosure, the term "crystallinity" refers to the ease of crystallization of the polylactic acid resin composition, and the term "good crystallinity" means that the polylactic acid resin composition is rapidly crystallized.

In addition, the block copolymer of the present disclosure preferably further contains a structural portion derived from a polymerization initiator. As the polymerization initiator, a known or common polymerization initiator can be used, and examples thereof include a low-molecular weight diol compound and a low-molecular weight diamine. The molecular weight of the polymerization initiator is preferably 500 or less.

Examples of the low-molecular weight diol compound include ethylene glycol, propylene glycol, 1,4-butylene glycol, 2-methylpropanediol, neopentyl glycol, pentanediol, 1,6-hexanediol, 1,8-octanediol, 1,9-nonanediol, 3-methyl-1,5-pentanediol, 3,3-dimethylolheptane, neopentyl glycol, diethylene glycol, dipropylene glycol, cyclohexane-1,4-diol, cyclohexane-1,4-dimethanol, and dimer acid diol. Among them, diethylene glycol is particularly preferable.

The content of the polymerization initiator is preferably from 0.2 to 2.0 mass%, more preferably from 0.2 to 1.0 mass%, and still more preferably from 0.2 to 0.5 mass% with respect to the total amount of the block copolymer of the present disclosure.

As the polyol in the block copolymer of the present disclosure, a polyol having a thermal decomposition temperature of 200°C or higher is preferable from the viewpoint of dissolving the polyol together with the polylactic acid, and specific examples thereof include polylactone polyols, polyester polyols, polyether polyols, polycarbonate polyols, polyolefin polyols, and poly(meth)acrylic polyols. One type of the polyol may be used alone, or two or more types thereof may be used.

Examples of the polylactone polyols include polybutyrolactone, polyvalerolactone, and polycaprolactone.

Examples of the polyester polyols include polyethylene adipate diol, polybutylene adipate diol, polyhexamethylene adipate diol, polyhexamethylene isophthalate diol, polyneopentyl adipate diol, polyethylene propylene adipate diol, polyethylene butylene adipate diol, polybutylene hexamethylene adipate diol, poly(polyoxytetramethylene) adipate diol, poly(3-methylpentylene adipate) diol, polyethylene azelate diol, polyethylene sebacate diol, polybutylene azelate diol, polybutylene sebacate diol, and polyneopentyl terephthalate diol.

Examples of the polyether polyols include polyalkylene glycols such as polyethylene glycol, polypropylene glycol, poly-1,2-butyleneglycol, polytetramethylene glycol (poly(1,4-butanediol)), poly-3-methyltetramethylene glycol, and polyneopentyl glycol.

Examples of the polycarbonate polyols include polyhexamethylene carbonate diol, polypentamethylene carbonate diol, polytetramethylene carbonate diol, and poly(tetramethylene/hexamethylene) carbonate diol (for example, a diol obtained by condensing 1,4-butanediol and 1,6-hexanediol with dialkyl carbonate via a dealcoholization reaction).

Examples of the poly(meth)acrylic polyols include homopolymers and copolymers of (meth)acrylates having a hydroxy group. In addition to the (meth)acrylates having a hydroxy group, the poly(meth)acrylic polyol can also be obtained by copolymerizing compounds having a polymerizable unsaturated bond. Note that in the present invention, the term "(meth)acrylic" means "acrylic and/or methacrylic".

Examples of the (meth)acrylates having a hydroxy group include those having one (meth)acryloyl group, and examples thereof include those having a hydroxyalkyl group having 2 to 20 carbon atoms (for example, hydroxyalkyl (meth)acrylates such as 2-hydroxyethyl (meth)acrylate, 2-hydroxypropyl (meth)acrylate, 2-hydroxybutyl (meth)acrylate, 3-hydroxypropyl (meth)acrylate, and 4-hydroxybutyl (meth)acrylate), and mono(meth)acrylates of trihydric alcohols (for example, mono(meth)acrylates of glycerol and mono(meth)acrylates of trimethylolpropane).

Among them, the polyol is preferably the polylactone polyol from the viewpoint of imparting flexibility to the polylactic acid resin composition, and is particularly preferably polycaprolactone because it is free of a component harmful to the human body.

The number average molecular weight (Mn) of the polyol in the block copolymer of the present disclosure is preferably from 1300 to 22000, more preferably from 1800 to 15000, and still more preferably from 3000 to 10000. When the number average molecular weight (Mn) is 1300 or more, it is easy to impart flexibility to the polylactic acid resin composition, and when the number average molecular weight (Mn) is 22000 or less, formation of a continuous crystal structure of the polyol is inhibited, and the flexibility of the material can be easily maintained.

The content of the polyol in the block copolymer of the present disclosure is preferably from 15 to 90 mass%, more preferably from 20 to 85 mass%, and still more preferably from 30 to 80 mass% with respect to the total amount of the block copolymer of the present disclosure. When the content of the polyol is 15 mass% or more, the amount of the polyol is sufficient, and it is easy to impart flexibility to the polylactic acid resin composition. When the content of the polyol is 90 mass% or less, it is easy to improve the crystallinity.

The polylactic acid in the block copolymer of the present disclosure is preferably a polylactic acid of a form different from that of the polylactic acid to be modified. That is, when the polylactic acid to be modified is poly(L-lactic acid), the polylactic acid in the block copolymer of the present disclosure preferably contains poly(D-lactic acid) as a main component, and when the polylactic acid to be modified is poly(D-lactic acid), the polylactic acid in the block copolymer of the present disclosure preferably contains poly(L-lactic acid) as a main component.

When the polylactic acid in the block copolymer of the present disclosure is poly(L-lactic acid) containing L-lactic acid as a main component, the content of the L-lactic acid unit is preferably 90 mass% or more, and more preferably, the polylactic acid is a homopolymer containing 99 mass% or more of the L-lactic acid unit. Similarly, when the polylactic acid is poly(D-lactic acid) containing D-lactic acid as a main component, the content of the D-lactic acid unit is preferably 90 mass% or more, and more preferably, the polylactic acid is a homopolymer containing 99 mass% or more of the D-lactic acid unit.

The number average molecular weight (Mn) of the polylactic acid in the block copolymer of the present disclosure is preferably from 4000 to 15000, more preferably from 5000 to 12000, and still more preferably from 6000 to 10000. When the number average molecular weight (Mn) is 4000 or more, the block copolymer forms an sc crystal with the polylactic acid of the present disclosure, and it is easy to improve the crystallinity, and when the number average molecular weight (Mn) is 15000 or less, it is possible to inhibit the destabilization of physical properties due to an uneven crystal state caused by the rapid growth of the sc crystal or the excessive expansion of the sc crystal domain.

The content of the polylactic acid in the block copolymer of the present disclosure is preferably from 10 to 85 mass%, more preferably from 15 to 80 mass%, and still more preferably from 20 to 75 mass% with respect to the total amount of the block copolymer of the present disclosure. When the content of the polylactic acid is 10 mass% or more, the amount of the polylactic acid is sufficient, and it is easy to impart crystallinity. When the content of the polylactic acid is 85 mass% or less, it is easy to impart flexibility. The content of the polylactic acid represents the total amount of the polylactic acid added to both terminals of the polyol.

The number average molecular weight (Mn) of the block copolymer of the present disclosure is preferably from 10000 to 50000, more preferably from 12000 to 45000, and still more preferably from 14000 to 40000. When the number average molecular weight of the block copolymer is 10000 or more, it is easy to impart flexibility and crystallinity. When the number average molecular weight of the block copolymer is 50000 or less, it is possible to inhibit the variation in the product quality due to the load on the stirring blade caused by an increase in viscosity and the uneven heat conduction in the reaction system.

The weight average molecular weight (Mw) of the block copolymer of the present disclosure is preferably from 10000 to 100000, more preferably from 15000 to 90000, and still more preferably from 20000 to 80000. When the weight average molecular weight of the block copolymer is 10000 or more, it is easy to impart flexibility and crystallinity. When the weight average molecular weight of the block copolymer is 100000 or less, it is possible to inhibit the variation in the product quality due to the load on the stirring blade caused by an increase in viscosity and the uneven heat conduction in the reaction system.

The total amount of the polyol, the polylactic acid, and the polymerization initiator in the block copolymer of the present disclosure is preferably 90 mass% or more, more preferably 95 mass% or more, and still more preferably 100 mass% with respect to the total amount of the block copolymer of the present disclosure.

The block copolymer of the present disclosure may contain another component in addition to the polymerization initiator, the polylactic acid, and the polyol. Examples of the other component include an antioxidant, a filler, a flame retardant, a pigment, an antistatic agent, a processing aid, and a viscosity improver. The content of the other compound is preferably 5 parts by mass or less, more preferably 3 parts by mass or less, still more preferably 1 part by mass or less, and particularly preferably 0 parts by mass with respect to 100 parts by mass in total of the block copolymer of the present disclosure. In addition, the block copolymer of the present disclosure may contain, in particular, a solvent, but it is preferable that the block copolymer does not contain a solvent for maintaining the pellet shape.

The block copolymer of the present disclosure preferably exhibits no fluidity at room temperature (25°C). In the present disclosure, "having fluidity" means a substance that is in the form of a liquid, or a paste exhibiting fluidity at room temperature, and is not a solid. The block copolymer of the present disclosure exhibits no fluidity at room temperature, and therefore can be easily mixed with the polylactic acid of the present disclosure, and is excellent in handleability.

The block copolymer of the present disclosure preferably has an average particle size of 0.5 mmΦ or more, more preferably 1 mmΦ or more, and still more preferably 1.5 mmΦ or more. When the average particle size of the block copolymer of the present disclosure is 0.5 mmΦ or more, the block copolymer can be easily kneaded with other resin compounds. The shape of the block copolymer pellets of the present disclosure is not particularly limited, and examples thereof include a circular shape, a spherical shape, and a round slice shape. Note that, in the present disclosure, the average particle size is obtained by shaking the block copolymer placed on sieves having openings of 2.8 mm, 2.36 mm, 2.0 mm, 1.7 mm, or 1.4 mm, respectively, and a receptacle stacked in this order for 30 seconds, selecting 10 pellets from the sieve on which the largest amount of the pellets remain, measuring the size of the pellets with a caliper, and calculating the average of the measured values.

The block copolymer of the present disclosure can be synthesized by a known or common method. Specifically, for example, the block copolymer can be produced by melt-mixing or solution-mixing a polyol and a polylactic acid at a predetermined ratio according to the block copolymer to be obtained, followed by solidification and further solid phase polymerization. As another method, the block copolymer can be produced by synthesizing a polyol in advance by heating preferably to 140 to 200°C, and sequentially polymerizing and growing a polylactic acid at molecular terminals of the polyol by heating preferably at from 150 to 250°C. The block copolymer can also be produced by first synthesizing a polylactic acid conversely, sequentially polymerizing and growing a polyol at a molecular terminal of the polylactic acid, and further sequentially polymerizing and growing a polylactic acid.

In particular, when the polyol is a polylactone polyol, it is preferable to produce the block copolymer by performing ring-opening polymerization of lactones at a terminal of a polymerization initiator to produce a polylactone, and then sequentially polymerizing and growing a polylactic acid at a molecular terminal of the polylactone.

### Polylactic Acid Resin Composition

The polylactic acid resin composition according to an embodiment of the present disclosure is a mixture of a polylactic acid and a block copolymer, the polylactic acid being poly(L-lactic acid) or poly(D-lactic acid), the block copolymer being a polylactic acid modifier including at least a polyol and a polylactic acid of a form different from that of the polylactic acid, in which the block copolymer exhibits no fluidity at room temperature, and has an average particle size of 0.5 mmφ or more, and relative to the poly(L-lactic acid) or the poly(D-lactic acid) alone, the polylactic acid resin composition reduces, by 30% or more, a time required for crystallization from a molten state when a temperature is lowered to 100 to 110°C and maintained, and the polylactic acid resin composition has a flexibility improvement percentage of 5% or more at room temperature.

The polylactic acid resin composition contains the poly(L-lactic acid) or the poly(D-lactic acid), and a block copolymer containing at least a polyol and a polylactic acid of a form different from that of the poly(L-lactic acid) or the poly(D-lactic acid), and thus an sc crystal can be formed. Therefore, relative to the poly(L-lactic acid) or the poly(D-lactic acid) alone, the polylactic acid resin composition reduces, by 30% or more, a time required for crystallization from a molten state when a temperature is lowered to 100 to 110°C and maintained, and thus can improve the crystallinity. In addition, the block copolymer contains the polyol, and relative to the poly(L-lactic acid) or the poly(D-lactic acid) alone, the polylactic acid resin composition has a flexibility improvement percentage of 5% or more, and thus can improve the flexibility. Furthermore, the block copolymer has no fluidity and has an average particle size of 0.5 mmΦ or more, and therefore can be easily mixed with the poly(L-lactic acid) or the poly(D-lactic acid), and the polylactic acid resin composition can be produced with excellent production efficiency.

As for the polylactic acid resin composition, the time required for crystallization from the molten state when the temperature is lowered to 100 to 110°C and maintained (hereinafter, the time is sometimes referred to as "crystallization half-time") is preferably 100 seconds or less, more preferably 80 seconds or less, and still more preferably 70 seconds or less. In addition, relative to the crystallization half-time of the poly(L-lactic acid) or the poly(D-lactic acid) alone (145 seconds), the polylactic acid resin composition reduces the crystallization half-time by 30% or more, preferably by 40% or more, and more preferably by 50% or more. When the crystallization half-time of the polylactic acid resin composition can be reduced by 30% or more relative to the crystallization half-time of the poly(L-lactic acid) or the poly(D-lactic acid) alone, the polylactic acid resin composition can be crystallized at an early stage and improved in production efficiency. In the present disclosure, when the temperature is lowered to 100 to 110°C from the molten state, the temperature may be any temperature within the above-mentioned range as long as the objects to be compared with each other are at the same temperature.

In the present disclosure, the crystallization half-time is calculated in differential scanning calorimetry (DSC) of the polylactic acid resin composition as a time required for reaching the half of the area of the exothermic peak of the polylactic acid resin composition, and the exothermic peak is observed when the polylactic acid resin composition is heated to 190°C, held for 5 minutes to be dissolved, rapidly cooled to 100 to 110°C, and held for 15 minutes.

The flexural modulus of the polylactic acid resin composition, which is measured by the method described in Examples below, is preferably 3700 MPa or less, more preferably 3600 MPa or less, and still more preferably 3500 MPa or less. The reduction percentage of the flexural modulus of the polylactic acid resin composition relative to the flexural modulus of the poly(L-lactic acid) or the poly(D-lactic acid) alone (flexibility improvement percentage) is 5% or more, preferably 7% or more, and more preferably 10% or more. When the flexibility improvement percentage of the polylactic acid resin composition relative to the poly(L-lactic acid) or the poly(D-lactic acid) alone is 5% or more, the polylactic acid resin composition easily exhibits flexibility.

As for the mass ratio of the polylactic acid to the block copolymer in the polylactic acid resin composition, which is measured by the method in Examples below, the difference between the measured mass ratio and the designed mass ratio is preferably within ±20%, and more preferably within ±10%. When the difference between the designed mass ratio and the actual mass ratio is within ±20%, the components can be easily mixed.

### Polylactic Acid

The polylactic acid resin composition contains either form of polylactic acid, that is, poly(L-lactic acid) or poly(D-lactic acid) (hereinafter, the polylactic acid is sometimes referred to as "polylactic acid of the present disclosure"). In addition, the block copolymer of the present disclosure is preferably used in combination with the polylactic acid of the present disclosure. The polylactic acid of the present disclosure contains a lactic acid (CH₃CH(OH)COOH) as a constituent unit, and is a polymer compound obtained by polymerization of a plurality of lactic acids through ester bonds.

Lactic acid is the constituent unit of the polylactic acid of the present disclosure and has two known optical isomers, that is, L-lactic acid and D-lactic acid. In the present disclosure, both L-lactic acid and D-lactic acid can be used as a constituent unit. In addition, for forming an sc crystal with the block copolymer described later, the polylactic acid of the present disclosure is preferably a polymer containing L-lactic acid or D-lactic acid as a main component. When the polylactic acid is poly(L-lactic acid) containing L-lactic acid as a main component, the content of the L-lactic acid unit is preferably 90 mass% or more, and more preferably, the polylactic acid is a homopolymer containing 99 mass% or more of the L-lactic acid unit. Similarly, when the polylactic acid is poly(D-lactic acid) containing D-lactic acid as a main component, the content of the D-lactic acid unit is preferably 90 mass% or more, and more preferably, the polylactic acid is a homopolymer containing 99 mass% or more of the D-lactic acid unit.

The polylactic acid of the present disclosure may contain another component as long as the properties thereof are not impaired. Examples of the other component include a catalyst, an end-capping agent, and an additive. The content of the other component is preferably 10 parts by mass or less, more preferably 5 parts by mass or less, and still more preferably 0 parts by mass with respect to the total amount of the polylactic acid.

The polylactic acid of the present disclosure can be produced by a known polymerization method for polylactic acid, and examples thereof include a method in which ring-opening polymerization of lactides, dehydration condensation of lactic acids, or a combination thereof with solid phase polymerization is performed, and then the resultant product is melted and solidified.

The number average molecular weight (Mn) of the polylactic acid of the present disclosure is preferably from 2000 to 50000000, and more preferably from 3000 to 20000000. The weight average molecular weight (Mw) of the polylactic acid of the present disclosure is preferably from 2000 to 80000000, and more preferably from 3000 to 40000000.

The content of the polylactic acid of the present disclosure with respect to the total amount of the polylactic acid resin composition is preferably from 50 to 99.5 mass%, more preferably from 60 to 99 mass%, and still more preferably from 70 to 98 mass%. When the content of the polylactic acid of the present disclosure is 50 mass% or more, crystallinity and flexibility can be improved while maintaining the physical properties of the polylactic acid. When the content of the polylactic acid of the present disclosure is 99.5 mass% or less, the flexibility and crystallinity of the polylactic acid resin composition can be easily improved.

The polylactic acid of the present disclosure preferably has an average particle size of 0.5 mmΦ or more, more preferably 1.0 mmΦ or more, and still more preferably 1.5 Φmm or more. When the average particle size of the polylactic acid of the present disclosure is 0.5 mmΦ or more, the polylactic acid can be easily kneaded.

### Block Copolymer

The polylactic acid resin composition contains, as a polylactic acid modifier, a block copolymer containing at least a polylactic acid of a form different from that of the polylactic acid of the present disclosure and a polyol. One type of the block copolymer may be used alone, or two or more types thereof may be used.

In addition, the block copolymer preferably further contains a structural portion derived from a polymerization initiator. Depending on the structure of the polymerization initiator, a structure such as a diblock copolymer, a triblock copolymer, a star-shaped block copolymer, or a comb-shaped block copolymer can be formed as the block copolymer.

As the polymerization initiator, a known or common polymerization initiator can be used, and examples thereof include a low-molecular weight hydroxy group-containing compound and a low-molecular weight amine. The molecular weight of the polymerization initiator is preferably 500 or less.

Examples of the low-molecular weight hydroxy group-containing compound include monool compounds such as ethanol, propanol, butanol, pentanol, and hexanol; diol compounds such as ethylene glycol, propylene glycol, 1,4-butylene glycol, 2-methylpropanediol, neopentyl glycol, pentanediol, 1,6-hexanediol, 1,8-octanediol, 1,9-nonanediol, 3-methyl-1,5-pentanediol, 3,3-dimethylolheptane, neopentyl glycol, diethylene glycol, dipropylene glycol, cyclohexane-1,4-diol, cyclohexane-1,4-dimethanol, and dimer acid diol; and triol compounds such as alkanetriols having 2 to 8 carbon atoms, such as 1,2,4-butanetriol and 1,2,6-hexanetriol, and 5- to 6-membered cycloalkanetriols such as 1,2,3-cyclohexanetriol, and also include low-molecular weight hydroxy group-containing compounds having 4 or more hydroxy groups. Among them, a diol compound is preferable, and diethylene glycol is particularly preferable because a triblock copolymer can be produced.

When the monool compound is used as the polymerization initiator, a diblock copolymer containing the polyol and the polylactic acid on one side of the polymerization initiator can be produced. When the diol compound is used as the polymerization initiator, a triblock copolymer containing the polyol and the polylactic acid at both terminals of the polymerization initiator can be produced. When the polymerization initiator contains a triol compound or a low-molecular weight hydroxy group-containing compound having four or more hydroxy groups, a star-shaped or comb-shaped block copolymer can be produced. Above all, the block copolymer is preferably the block copolymer of the present disclosure.

The block copolymer exhibits no fluidity at room temperature (25°C). In the present disclosure, "having fluidity" means a substance that is in the form of a liquid, or a paste exhibiting fluidity at room temperature, and is not a solid. The block copolymer exhibits no fluidity at room temperature, and therefore can be easily mixed with the polylactic acid of the present disclosure, and is excellent in handleability.

The block copolymer has an average particle size of 0.5 mmΦ or more, preferably 1 mmΦ or more, and more preferably 1.5 mmΦ or more. When the average particle size of the block copolymer is 0.5 mm or more, the block copolymer can be easily kneaded with other resin compounds. The shape of the block copolymer pellets is not particularly limited, and examples thereof include a circular shape, a spherical shape, and a round slice shape.

The content of the block copolymer in the polylactic acid resin composition is preferably from 0.5 to 50 mass%, more preferably from 1 to 40 mass%, and still more preferably from 2 to 30 mass%. When the content of the block copolymer is 0.5% or more, the flexibility and crystallinity of the polylactic acid resin composition can be easily improved. When the content of the block copolymer is 50 mass% or less, crystallinity and flexibility can be improved while maintaining the physical properties of the polylactic acid.

The block copolymer can be produced by the same method as that for the above-mentioned block copolymer of the present disclosure.

The polylactic acid resin composition can be produced by mixing the polylactic acid of the present disclosure with the block copolymer by a known or common method. Specifically, the polylactic acid resin composition can be prepared by supplying the polylactic acid of the present disclosure and the block copolymer through a main feeder of a twin-screw kneading extruder, and kneading and melting the polylactic acid and the block copolymer in the extruder. In the polylactic acid resin composition, since the block copolymers exhibit no fluidity at room temperature and can be supplied in the shape of pellets having an average particle size of 0.5 mm or more, the block copolymers can be easily mixed with the polylactic acid that is also in the shape of pellets.

It is preferable that the polylactic acid resin composition is produced without using a solvent. Since the polylactic acid resin composition does not require a solvent, it is not necessary to provide steps for dissolution or desolvation, and therefore, the polylactic acid resin composition can be produced with excellent production efficiency.

### Method for Producing Molded Article

A molded article can be produced by molding the polylactic acid resin composition, which is produced by the above-mentioned method, by a method such as injection molding, extrusion molding, compression molding, transfer molding, lamination molding, cast molding, powder molding, calender molding, foam molding, blow molding, vacuum pressure molding, and melt spinning.

It is known that in a molding step in which a polylactic acid is used as a raw material, crystallization of the polylactic acid is slow, a cooling step takes time, and production efficiency is deteriorated. However, since the polylactic acid resin composition contains the block copolymer, an sc crystal can be formed and crystallization can be achieved at an early stage, and production efficiency can be improved. In addition, since the polylactic acid resin composition contains the polyol structural portion, the polylactic acid resin composition is excellent in flexibility.

Each aspect disclosed in the present description can be combined with another feature disclosed in the present description. Moreover, each of the configurations, combinations thereof, and the like in each of the embodiments are merely examples, and various additions, omissions, and other changes of the configurations may be made, as appropriate, without departing from the spirit of the present disclosure. The present disclosure is not limited by the embodiments and is limited only by the claims.

### Example

An embodiment of the present disclosure will be described in more detail below based on Examples.

### Production Example 1

### Synthesis of Block Copolymer

As raw materials, 246.77 g of ε-caprolactone (available from Daicel Corporation) and 2.19 g of diethylene glycol (available from Tokyo Chemical Industry Co., Ltd.) were charged into a separable flask, the components were heated to 100°C, and then 0.0314 g of tin(II) octoate (trade name: "Stanoct" available from FUJIFILM Wako Pure Chemical Corporation) was charged. Thereafter, the components were heated to 150°C, and stirred and heated until the concentration of ε-caprolactone became less than 1 mass%. After cooling to 60°C, 60.60 g of D-lactide (D-form purity: 96.4%) was charged, and the components were heated to 170°C at normal pressure, and stirred and heated until the concentration of D-lactide became less than 4 mass%. Through the above steps, 306.1 g of a poly(D-lactic acid) (PDLA)/polycaprolactone (PCL)/poly(D-lactic acid) (PDLA) triblock copolymer (weight average molecular weight (Mw): 31000, number average molecular weight (Mn): 15000, hereinafter sometimes referred to as "block copolymer A") was obtained.

The block copolymer A was placed in a melting cylinder (500 ml) of a simple extruder, and heated and melted with a heating jacket at from 170°C to 190°C for 10 minutes. A pressurizing cylinder was operated to pass the resin through a (circular) die having a hole diameter of 2.5 mmΦ, and the resin was pelletized by a small pelletizer to produce pellets of the block copolymer of Production Example 1 having an average particle size of 2.3 mmΦ.

### Production Example 2

Under the same conditions as in Production Example 1 except that 108.56 g of ε-caprolactone (available from Daicel Corporation) and 488.5 g of D-lactide (D-form purity: 96.4%) were used as raw materials, 531 g of pellets of a block copolymer of Production Example 2 were obtained. The block copolymer of Production Example 2 was a PDLA/PCL/PDLA triblock copolymer (weight average molecular weight (Mw): 34000, number average molecular weight (Mn): 20000, hereinafter sometimes referred to as "block copolymer B").

### Production Example 3

Under the same conditions as in Production Example 1 except that 238.91 g of ε-caprolactone (available from Daicel Corporation) and 358.4 g of D-lactide (D-form purity: 96.4%) were used as raw materials, 583 g of pellets of a block copolymer of Production Example 3 were obtained. The block copolymer of Production Example 3 was a PDLA/PCL/PDLA triblock copolymer (weight average molecular weight (Mw): 44000, number average molecular weight (Mn): 30000, hereinafter sometimes referred to as "block copolymer C").

### Production Example 4

Under the same conditions as in Production Example 1 except that 413.68 g of ε-caprolactone (available from Daicel Corporation) and 413.7 g of D-lactide (D-form purity: 96.4%) were used as raw materials, 814 g of pellets of a block copolymer of Production Example 4 were obtained. The block copolymer of Production Example 4 was a PDLA/PCL/PDLA triblock copolymer (weight average molecular weight (Mw): 73000, number average molecular weight (Mn): 39000, hereinafter sometimes referred to as "block copolymer D").

### Example 1

The pellets of the block copolymer A of Production Example 1 and poly(L-lactic acid) (PLLA) pellets (L-form purity: 99% or more, average particle size: 2.5 mmΦ) were each dried at 80°C for 3 hours or more in a constant-temperature dryer. After drying, the pellets were allowed to cool in a desiccator, weighed at a ratio of 3 mass% of the block copolymer A to 97 mass% of the PLLA, and blended in a shaker. The cylinder temperature of a small-sized resin-kneading device (trade name: Labo Plastomill 4M150 available from Toyo Seiki Seisaku-sho, Ltd.) was set to 190°C, and 30 g of the weighed pellets were charged into a kneading chamber while rotating the cylinder at 10 rpm. Thereafter, the lid was closed, the rotation speed of the cylinder was increased to 50 rpm, and the components were kneaded for 5 minutes. The rotation of the cylinder was stopped, and the uniformly kneaded molten resin was taken out, placed in a metal tray, and cooled in a desiccator to produce a polylactic acid resin composition of Example 1.

### Example 2

A polylactic acid resin composition of Example 2 was produced in the same manner as in Example 1 except that the blending amounts were changed as shown in Table 1.

### Examples 3 and 4

Polylactic acid resin compositions of Examples 3 and 4 were produced in the same manner as in Example 1 except that the block copolymer B produced in Production Example 2 was used and the blending amounts were changed as shown in Table 1.

### Examples 5 and 6

Polylactic acid resin compositions of Examples 5 and 6 were produced in the same manner as in Example 1 except that the block copolymer C produced in Production Example 3 was used and the blending amounts were changed as shown in Table 1.

### Examples 7 and 8

Polylactic acid resin compositions of Examples 7 and 8 were produced in the same manner as in Example 1 except that the block copolymer D produced in Production Example 4 was used and the blending amounts were changed as shown in Table 1.

### Comparative Example 1

A polylactic acid resin composition of Comparative Example 1 was produced in the same manner as in Example 1 except that poly(L-lactic acid) alone was used.

### Comparative Example 2

A powdery crystal improver B (an aromatic sulfonate, average particle size: 35 µm) and poly(L-lactic acid) (PLLA) pellets (L-form purity: 99% or more, average particle size: 2.5 mmΦ) were dried at 80°C for 3 hours or more in a constant-temperature dryer. The cylinder temperature of a small-sized resin-kneading device (trade name: Labo Plastomill 4M150 available from Toyo Seiki Seisaku-sho, Ltd.) was set to 190°C, and 29.1 g of the weighed PLLA pellets were charged into a kneading chamber, and then 0.9 g of the crystal improver B was charged into the kneading chamber while rotating the cylinder at 10 rpm. Thereafter, the lid was closed, the rotation speed of the cylinder was increased to 50 rpm, and the components were kneaded for 5 minutes. The rotation of the cylinder was stopped, and the uniformly kneaded molten resin was taken out, placed in a metal tray, and cooled in a desiccator to produce a polylactic acid resin composition of Comparative Example 2.

### Comparative Example 3

A polylactic acid resin composition of Comparative Example 3 was produced in the same manner as in Comparative Example 2 except that a powdery physical property improver A (an acrylic compound, average particle size: 100 µm) was used.

### Comparative Example 4

A polylactic acid resin composition of Comparative Example 4 was produced in the same manner as in Comparative Example 2 except that a liquid physical property improver B (an aliphatic ester-based surfactant) was used.

### Comparative Example 5

Poly(D-lactic acid) (PDLA, a granular crystal improver A, average particle size: 2.5 mmΦ), the powdery physical property improver A, and poly(L-lactic acid) (PLLA) pellets (L-form purity: 99% or more) were dried at 80°C for 3 hours or more in a constant-temperature dryer. The cylinder temperature of a small-sized resin-kneading device (trade name: Labo Plastomill 4M150 available from Toyo Seiki Seisaku-sho, Ltd.) was set to 190°C, and 29.1 g of the weighed PLLA pellets were charged into a kneading chamber, and then 0.3 g of the granular crystal improver A and 0.6 g of the powdery physical property improver A were charged into the kneading chamber while rotating the cylinder at 10 rpm. Thereafter, the lid was closed, the rotation speed of the cylinder was increased to 50 rpm, and the components were kneaded for 5 minutes. The rotation of the cylinder was stopped, and the uniformly kneaded molten resin was taken out, placed in a metal tray, and cooled in a desiccator to produce a polylactic acid resin composition of Comparative Example 5.

### Comparative Example 6

A polylactic acid resin composition of Comparative Example 6 was produced in the same manner as in Comparative Example 5 except that the liquid physical property improver B was used instead of the powdery physical property improver A.

### Comparative Example 7

A polylactic acid resin composition of Comparative Example 7 was produced in the same manner as in Comparative Example 5 except that the powdery crystal improver B was used instead of the granular crystal improver A.

### Comparative Example 8

A polylactic acid resin composition of Comparative Example 8 was produced in the same manner as in Comparative Example 7 except that the liquid physical property improver B was used instead of the powdery physical property improver A.

### Evaluation

The polylactic acid resin compositions produced in Examples and Comparative Examples were subjected to the following evaluation, and the results are shown in Table 1. In Table 1, "/" indicates that the measurement was impossible, and "-" indicates that the measurement was not performed.

### (1) Crystallization Half-Time and Crystallization Time Reduction Rate

The polylactic acid resin compositions produced in Examples and Comparative Examples were dried at 80°C for 3 hours, 5 mg of each of the polylactic acid resin compositions was sampled, and measurement was performed by DSC under the following conditions. For the exothermic peak formed following the crystallization of the PLLA that is the main component of the polylactic acid resin composition, the time from the timing at which the peak starts to be formed to the time at which the area reaches the half of the peak area is counted by integration to calculate the crystallization half-time, and the results are described.
Measuring apparatus: DSC Q2000 available from TA Instruments
Measurement conditions: The polylactic acid resin composition is heated from room temperature to 190°C (heating rate: 86°C/min), and held for 5 minutes. Then, the polylactic acid resin composition is cooled to 100°C (cooling rate: 83°C/min), and held for 15 minutes.

The reduction percentage of the crystallization half-time relative to that of the poly(L-lactic acid) alone of Comparative Example 1 was calculated as the crystallization time reduction percentage.

### (2) Flexural Modulus and Flexibility Improvement Percentage

The polylactic acid resin compositions produced in Examples and Comparative Examples were sheared to have a particle size of from 1 to 3 mm, and dried in a constant-temperature dryer under conditions of 80°C and 3 hours. A mold having a plurality of frames of 1 × 10 × 55 mm in size was placed on a metal plate, 1 g of the polylactic acid resin composition was added to each frame, a metal plate was placed thereon, and the mold and the metal plates were set in a hot press (trade name: Mini Test Press 10 available from Toyo Seiki Seisaku-sho, Ltd.) set at 190°C in advance. The polylactic acid resin composition, which was placed in the hot press together with the metal plates and the mold, was preheated for 3 minutes without pressurization, and then the pressing pressure was increased to 10 MPa and held for 5 minutes. Thereafter, the metal plates and the mold were transferred to a water circulation type cooling press and cooled for 5 minutes, a test piece was taken out from the mold, and the test piece having a size of 1 × 10 × 55 mm was placed in a constant-temperature dryer and subjected to crystallization treatment at 100°C for 20 minutes. The test piece produced by the above-mentioned method was subjected to flexural modulus measurement using a Tensilon tester under the following conditions.

### Apparatus: RTC-1350A available from ORENTEC CORPORATION

### Measurement conditions:

- Test type: Three-point bending test
- Distance between lower two fulcrums: 32 mm
- Rigidity of main body of tester: 0 mm/kgf
- Load full-scale: 5 N
- Test speed: 1 mm/min
- Control method: Constant moving speed control
- Measurement temperature: Room temperature

The reduction percentage of the flexural modulus relative to that of the poly(L-lactic acid) alone of Comparative Example 1 was calculated as the flexibility improvement percentage.

### (3) Handleability and Production Stability

Regarding the polylactic acid resin compositions produced in Examples and Comparative Examples, those in which the additive was colored in red and the PLLA pellets were colored in blue in advance with dyes were used. When two kinds of additives were used, the crystal improver was colored in red and the physical property improver was colored in blue. The components were mixed in the same manner except that the components were colored and heated, and pellets were sampled from five random places with a 10 ml bottle. The pellets taken out from the 10 ml bottle were visually separated by color with tweezers, and the mass of the pellets of each color was measured. For the pellets of each color, the difference between the actually measured mass ratio and the designed mass ratio was evaluated as follows. When a powdery additive was used, the pellets were sieved and separated by color, and the measurement was performed.
∘: The difference between the actually measured mass ratio and the designed mass ratio is 10% or less.
△+: The difference between the actually measured mass ratio and the designed mass ratio is more than 10% to 20%.
△: The difference between the actually measured mass ratio and the designed mass ratio is more than 20% to 30%.
△-: The difference between the actually measured mass ratio and the designed mass ratio is more than 30% to 40%.
×: The difference between the actually measured mass ratio and the designed mass ratio is more than 40%, or mixing using an actual machine is difficult.

### (4) Mold Release Time in Injection Molding and Mold Release Time Reduction Percentage

The polylactic acid resin composition of Example 4 was dried at 80°C for 3 hours in a constant-temperature dryer, and a test piece was produced by an injection molding machine under the following conditions. The pellets were once melted on the extruder side of the injection molding machine, injected into a mold, and held at a constant pressure after injection. The shortest time from the timing at which the pressure holding was released to the timing at which the test piece was sufficiently crystallized and solidified and can be taken out from the mold without deformation was defined as the mold release time in injection molding.
Injection molding machine: Electric injection molding machine (trade name "J110AD-180H" available from The Japan Steel Works, LTD.)
Screw diameter: Φ 35 mm
Mold shape: JIS K 7139 (ISO 20753) type A1 dumbbell test piece shape
Cylinder temperature: 40 to 200°C (average temperature: 190°C)
Mold temperature: 100 to 105°C (set temperature: 100°C)

In addition, the reduction percentage of the mold release time relative to the mold release time in injection molding of the poly(L-lactic acid) alone of Comparative Example 1 (mold release time reduction percentage) was calculated.

### Table 1

**Table 1**

| | Composition (mass%) | | | | | | | | | Crystallization half-time (190°C → 100°C) | Crystallization time reduction percentage | Flexural modulus | Flexibility improvement percentage | Handleability and production stability | Mold release time in injection molding (190°C → 100°C) | Mold release time reduction percentage |
|---|---|---|---|---|---|---|---|---|---|---|---|---|---|---|---|---|
| | PLLA | Crystal improver A | Crystal improver B | Physical property improver A | Physical property improver B | Block copolymer A | Block copolymer B | Block copolymer C | Block copolymer D | Seconds | % | MPa | % | | Seconds | % |
| Comparative Example 1 | 100 | | | | | | | | | 145 | / | 3855 | / | / | 390 | / |
| Comparative Example 2 | 97 | | 3 | | | | | | | 18 | 88 | 3918 | -2 | Δ | - | - |
| Comparative Example 3 | 97 | | | 3 | | | | | | 114 | 22 | 3438 | 11 | Δ | - | - |
| Comparative Example 4 | 97 | | | | 3 | | | | | 97 | 33 | 3623 | 6 | × | - | - |
| Comparative Example 5 | 97 | 1 | | 2 | | | | | | 28 | 81 | 3422 | 11 | △- | - | - |
| Comparative Example 6 | 97 | 1 | | | 2 | | | | | 38 | 74 | 3370 | 13 | × | - | - |
| Comparative Example 7 | 97 | | 1 | 2 | | | | | | 54 | 63 | 3495 | 9 | △ | - | - |
| Comparative Example 8 | 97 | | 1 | | 2 | | | | | 52 | 64 | 3415 | 11 | × | - | - |
| Example 1 | 97 | | | | | 3 | | | | 66 | 55 | 3666 | 5 | ○ | - | - |
| Example 2 | 90 | | | | | 10 | | | | 31 | 78 | 379 | 90 | ○ | - | - |
| Example 3 | 97 | | | | | | 3 | | | 36 | 75 | 3574 | 7 | ○ | 80 | 79 |
| Example 4 | 90 | | | | | | 10 | | | 24 | 84 | 3287 | 15 | ○ | - | - |
| Example 5 | 97 | | | | | | | 3 | | 21 | 85 | 3574 | 7 | ○ | - | - |
| Example 6 | 90 | | | | | | | 10 | | 29 | 80 | 361 | 91 | ○ | - | - |
| Example 7 | 97 | | | | | | | | 3 | 73 | 50 | 3446 | 11 | ○ | - | - |
| Example 8 | 90 | | | | | | | | 10 | 19 | 87 | 2971 | 23 | ○ | - | - |
| Sample form | Granular | Granular | Powdery | Powdery | Liquid | Granular | Granular | Granular | Granular | Polylactic acid resin composition | | Resin test piece | | | | |
| Particle size (µm) | 2500 | 2500 | 35 | 100 | / | 2300 | 2300 | 2300 | 2300 | | | | | | | |

It was confirmed that the polylactic acid resin compositions containing the polylactic acid modifiers of Examples were improved in flexibility and crystallinity as compared with the case of known additives. It was also confirmed that as for the polylactic acid resin compositions of Examples, the components were easily mixed without special kneading equipment, and the crystallization time was reduced, and thus the polylactic acid resin compositions can be produced with excellent production efficiency. Meanwhile, when polylactic acid alone was used, semi-crystallization took a long time, and the polylactic acid resin composition was poor in flexural modulus (Comparative Example 1). In addition, when only the powdery crystal improver was used, the flexibility was not improved and kneading was difficult, and thus the polylactic acid modifier was poor in handleability (Comparative Example 2). When the powdery or liquid physical property improver was used, the flexibility and crystallinity were improved, but the polylactic acid modifiers were poor in handleability (Comparative Examples 3 and 4). In addition, when the crystal improver and the physical property improver were used in combination, the flexibility and crystallinity were improved, but the polylactic acid modifiers were poor in handleability (Comparative Examples 5 to 8).

Hereinafter, variations of the present disclosure will be described.

### Appendix 1

A polylactic acid modifier including at least:
a constituent unit derived from poly(L-lactic acid) or poly(D-lactic acid); and
a constituent unit derived from a polyol,
the polylactic acid modifier being a block copolymer having a structure of polylactic acid/polyol/polylactic acid.

### Appendix 2

The polylactic acid modifier according to appendix 1, having an average particle size of 0.5 mmΦ or more.

### Appendix 3

The polylactic acid modifier according to appendix 1 or 2, the polylactic acid modifier exhibiting no fluidity at room temperature.

### Appendix 4

The polylactic acid modifier according to any one of appendixes 1 to 3, in which the polyol is polycaprolactone.

### Appendix 5

A polylactic acid resin composition being a mixture of a polylactic acid and a block copolymer, the polylactic acid being poly(L-lactic acid) or poly(D-lactic acid), the block copolymer being a polylactic acid modifier including at least a polyol and a polylactic acid of a form different from that of the polylactic acid, in which
the block copolymer exhibits no fluidity at room temperature, and has an average particle size of 0.5 mmΦ or more, and
relative to the poly(L-lactic acid) or the poly(D-lactic acid) alone, the polylactic acid resin composition reduces, by 30% or more, a time required for crystallization from a molten state when a temperature is lowered to 100 to 110°C and maintained, and
the polylactic acid resin composition has a flexibility improvement percentage of 5% or more at room temperature.

### Appendix 6

The polylactic acid resin composition according to appendix 5, in which a content of the block copolymer with respect to a total amount of the polylactic acid resin composition is from 0.5 to 50 mass%.

### Appendix 7

The polylactic acid resin composition according to appendix 5 or 6, in which the polyol is polycaprolactone.

### Appendix 8

A method for producing a molded article, the method including molding the polylactic acid resin composition according to any one of appendixes 5 to 7 by any one molding method selected from the group consisting of injection molding, extrusion molding, compression molding, transfer molding, lamination molding, cast molding, powder molding, calender molding, foam molding, blow molding, vacuum pressure molding, and melt spinning.

## Claims

1. A polylactic acid modifier comprising at least:
a constituent unit derived from poly(L-lactic acid) or poly(D-lactic acid); and
a constituent unit derived from a polyol,
the polylactic acid modifier being a block copolymer having a structure of polylactic acid/polyol/polylactic acid.

2. The polylactic acid modifier according to claim 1, having an average particle size of 0.5 mmΦ or more.

3. The polylactic acid modifier according to claim 1 or 2, the polylactic acid modifier exhibiting no fluidity at room temperature.

4. The polylactic acid modifier according to claim 1 or 2, wherein the polyol is polycaprolactone.

5. A polylactic acid resin composition being a mixture of a polylactic acid and a block copolymer, the polylactic acid being poly(L-lactic acid) or poly(D-lactic acid), the block copolymer being a polylactic acid modifier including at least a polyol and a polylactic acid of a form different from that of the polylactic acid, wherein
the block copolymer exhibits no fluidity at room temperature, and has an average particle size of 0.5 mmΦ or more, and
relative to the poly(L-lactic acid) or the poly(D-lactic acid) alone, the polylactic acid resin composition reduces, by 30% or more, a time required for crystallization from a molten state when a temperature is lowered to 100 to 110°C and maintained, and
the polylactic acid resin composition has a flexibility improvement percentage of 5% or more at room temperature.

6. The polylactic acid resin composition according to claim 5, wherein a content of the block copolymer with respect to a total amount of the polylactic acid resin composition is from 0.5 to 50 mass%.

7. The polylactic acid resin composition according to claim 5 or 6, wherein the polyol is polycaprolactone.

8. A method for producing a molded article, the method comprising molding the polylactic acid resin composition described in claim 5 or 6 by any one molding method selected from the group consisting of injection molding, extrusion molding, compression molding, transfer molding, lamination molding, cast molding, powder molding, calender molding, foam molding, blow molding, vacuum pressure molding, and melt spinning.
